# EUROPEAN PATENT APPLICATION

(11) **EP 4 618 539 A1**
(43) Date of publication of application: **17.09.2025**
(21) Application number: 23896032.2
(22) Date of filing: 05.07.2023
(51) Int. Cl.: H04N 19/159

(54) **VIDEO CODING METHOD AND RELATED APPARATUS**

(30) Priority: 29.11.2022 CN 202211511315; 24.02.2023 CN 202310165064
(71) Applicant: Huawei Cloud Computing Technologies Co., Ltd., Guiyang, Guizhou 550025 (CN)
(72) Inventor: YU, Chang, Guiyang, Guizhou 550025 (CN); DING, Wenpeng, Guiyang, Guizhou 550025 (CN); LI, Gang, Guiyang, Guizhou 550025 (CN); FAN, Xiaopeng, Harbin, Heilongjiang 150001 (CN); YU, Xuechun, Guiyang, Guizhou 550025 (CN)
(74) Representative: Grünecker Patent- und Rechtsanwälte PartG mbB
(86) International application number: PCT/CN2023/105880
(87) International publication number: WO 2024/113869

(57) **Abstract**

This application discloses a video encoding method and a related apparatus, and belongs to the field of data compression technologies. The method includes: performing scene detection on a current frame of picture to obtain a scene status of the current frame of picture; determining, based on the scene status, a reference frame structure corresponding to the current frame of picture, where the reference frame structure indicates a reference frame of picture of the current frame of picture and an encoding layer of the current frame of picture; and encoding the current frame of picture into a bit stream based on the reference frame structure. The scene status of the current frame of picture is sensed by detecting a video scene of the current frame of picture. The reference frame structure corresponding to the current frame of picture is adaptively determined based on a feature of content of the video scene of the current frame of picture. In a process of encoding a video, a reference frame of picture and an encoding layer of each frame of picture are adjusted in real time with reference to features such as whether scene switching occurs or whether a scene is kept stable in each frame of picture, to implement flexible switching of the reference frame structure in the encoding process, and improve frame-level parallelism and video encoding efficiency.

## Description

This application claims priorities to Chinese Patent Application No. 202211511315.3, filed on November 29, 2022 and entitled "ENCODING METHOD, APPARATUS, DEVICE, STORAGE MEDIUM, AND COMPUTER PROGRAM", and to Chinese Patent Application No. 202310165064.6, filed on February 24, 2023 and entitled "VIDEO ENCODING METHOD AND RELATED APPARATUS", which are incorporated herein by reference in their entireties.

### TECHNICAL FIELD

This application relates to the field of data compression technologies, and in particular, to a video encoding method and a related apparatus.

### BACKGROUND

A video encoding technology is the premise for computer devices to process video signals. Generally, a bandwidth of a video signal is very high, and is generally greater than 20 megabits/second. In this case, it is difficult for a computer device to store and process the video signal. Therefore, the video encoding technology needs to be used to reduce the bandwidth of the video signal to 1 megabit/second to 10 megabits/second, so that the computer device can transmit or store the video signal.

In a related technology, a computer device encodes a video signal based on a preconfigured reference frame structure. For example, the computer device encodes the video signal based on an IPPP reference frame structure. In other words, the video signal includes a plurality of frames of pictures, a first frame of picture in the plurality of frames of pictures is an I frame, and the remaining frames of pictures are all P frames. Intra predictive coding is performed on the I frame, and inter predictive coding is performed on the P frames. In addition, a reference frame of picture of each P frame is a previous frame of picture adjacent to the P frame in time domain. For another example, to improve encoding efficiency, the computer device encodes the P frames based on a hierarchical reference frame structure. In other words, a plurality of P frames included in a video signal are divided into a plurality of time domain layers, where the plurality of time domain layers respectively include P frames with different frame sequence numbers, and a reference frame of picture of each P frame is determined based on the hierarchical reference frame structure.

However, the reference frame structure is preconfigured, and is fixed in an entire encoding process, and flexibility is low. In addition, the IPPP reference frame structure is actually used to encode a video signal according to a forward error correction (forward error correction, FEC) method. In other words, each frame of picture included in the video signal needs to be used as a reference frame of picture to perform inter predictive coding on a next frame of picture. In this way, when any frame of picture is lost, decoding and reconstruction of a subsequent frame of picture are affected.

### SUMMARY

This application provides a video encoding method and a related apparatus, to flexibly switch a reference frame structure in an encoding process, and improve frame-level parallelism and video encoding efficiency. The technical solutions are as follows.

According to a first aspect, a video encoding method is provided. The method includes: performing scene detection on a current frame of picture to obtain a scene status of the current frame of picture, where the current frame of picture is a frame of picture that is encoded through inter predictive coding in a video signal; determining, based on the scene status, a reference frame structure corresponding to the current frame of picture, where the reference frame structure indicates a reference frame of picture of the current frame of picture and an encoding layer of the current frame of picture; and encoding the current frame of picture into a bit stream based on the reference frame structure.

The scene status of the current frame of picture is sensed by detecting a video scene of the current frame of picture. The reference frame structure corresponding to the current frame of picture is adaptively determined based on a feature of content of the video scene of the current frame of picture. In this way, in a process of encoding a video, a reference frame of picture and an encoding layer of each frame of picture are adjusted in real time with reference to features such as whether scene switching occurs or whether a scene is kept stable in each frame of picture, to implement flexible switching of the reference frame structure in the encoding process, and improve frame-level parallelism and video encoding efficiency.

A first frame difference between the current frame of picture and a base frame of picture is calculated, where the base frame of picture is a frame of picture that is located before the current frame of picture and in which scene switching occurs last time. When the first frame difference is not greater than a first frame difference threshold, it is determined that the scene status is stable scene. The determining, based on the scene status, a reference frame structure corresponding to the current frame of picture includes: based on that the scene status is stable scene, determining that the reference frame structure corresponding to the current frame of picture is a hierarchical reference structure or an IPPP structure.

A first frame difference between the current frame of picture and a base frame of picture is calculated, where the base frame of picture is a frame of picture that is located before the current frame of picture and in which scene switching occurs last time. A second frame difference between the current frame of picture and a window end frame of picture is calculated, where the window end frame of picture and the current frame of picture are located in a same detection window, and the window end frame of picture is a last frame of picture included in the detection window. When the first frame difference is greater than a first frame difference threshold, and the second frame difference is not greater than a second frame difference threshold, it is determined that the scene status is scene switching. The determining, based on the scene status, a reference frame structure corresponding to the current frame of picture includes: based on that the scene status is scene switching, determining that the reference frame structure corresponding to the current frame of picture is a hierarchical reference structure or an IPPP structure.

A first frame difference between the current frame of picture and a base frame of picture is calculated, where the base frame of picture is a frame of picture that is located before the current frame of picture and in which scene switching occurs last time. A second frame difference between the current frame of picture and a window end frame of picture is calculated, where the window end frame of picture and the current frame of picture are located in a same detection window, and the window end frame of picture is a last frame of picture included in the detection window. A third frame difference between the base frame of picture and the window end frame of picture is calculated. When the first frame difference is greater than a first frame difference threshold, the second frame difference is greater than a second frame difference threshold, and the third frame difference is not greater than a third frame difference threshold, it is determined that the scene status is scene flickering. The determining, based on the scene status, a reference frame structure corresponding to the current frame of picture includes: based on that the scene status is scene flickering, determining that the reference frame structure corresponding to the current frame of picture is an IPPP structure.

A first frame difference between the current frame of picture and a base frame of picture is calculated, where the base frame of picture is a frame of picture that is located before the current frame of picture and in which scene switching occurs last time. A second frame difference between the current frame of picture and a window end frame of picture is calculated, where the window end frame of picture and the current frame of picture are located in a same detection window, and the window end frame of picture is a last frame of picture included in the detection window. A third frame difference between the base frame of picture and the window end frame of picture is calculated. When the first frame difference is greater than a first frame difference threshold, the second frame difference is greater than a second frame difference threshold, and the third frame difference is greater than a third frame difference threshold, it is determined that the scene status is frequent scene switching. The determining, based on the scene status, a reference frame structure corresponding to the current frame of picture includes: based on that the scene status is frequent scene switching, determining that the reference frame structure corresponding to the current frame of picture is an IPPP structure.

When the reference frame structure corresponding to the current frame of picture is the hierarchical reference structure, an encoding layer of the hierarchical reference structure corresponding to the current frame of picture further needs to be determined. During actual application, an encoder device can determine the encoding layer corresponding to the current frame of picture in different manners. The following describes two manners separately.

In a first manner, a movement complexity of the current frame of picture is calculated, and the encoding layer of the hierarchical reference structure corresponding to the current frame of picture is determined based on the movement complexity.

For example, the encoder device supports a maximum of three encoding layers. When the movement complexity is less than a first complexity threshold, it is determined that the encoding layer of the current frame of picture is a third layer. When the movement complexity is greater than or equal to a first complexity threshold and the movement complexity is less than a second complexity threshold, it is determined that the encoding layer of the current frame of picture is a second layer. When the movement complexity is greater than or equal to a second complexity threshold, it is determined that the encoding layer of the current frame of picture is a first layer.

In a second manner, a current network status and a current network bandwidth are obtained, and an encoding layer of the hierarchical reference structure corresponding to the current frame of picture is determined based on the network status and the network bandwidth.

The current network status and the current network bandwidth are obtained by analyzing a network environment in real time. To be specific, the current network bandwidth is obtained in real time, and the obtained network bandwidth is compared with a preset target bandwidth. When the obtained network bandwidth is less than the target bandwidth, it is determined that the current network status is congested network. When the obtained network bandwidth is not less than the target bandwidth, it is determined that the current network status is smooth network. In this way, the current network status and the current network bandwidth are sensed in real time, and the encoding layer of the current frame of picture is flexibly determined with reference to the current network status and the current network bandwidth, to implement bit rate control. This reduces network bandwidth costs and improves video encoding efficiency.

Generally, the network status includes congested network and smooth network. When the network status is congested network, the encoding layer of the current frame of picture is determined based on the network bandwidth, a first bandwidth threshold, and a second bandwidth threshold, where the second bandwidth threshold is greater than the first bandwidth threshold.

For example, the encoder device supports a maximum of three encoding layers. When the network bandwidth is less than the first bandwidth threshold, it is determined that the encoding layer of the current frame of picture is a third layer. When the network bandwidth is greater than or equal to the first bandwidth threshold and the network bandwidth is less than the second bandwidth threshold, it is determined that the encoding layer of the current frame of picture is a second layer. When the network bandwidth is greater than or equal to the second bandwidth threshold, it is determined that the encoding layer of the current frame of picture is a first layer.

Based on the foregoing descriptions, the network status includes congested network and smooth network. When the network status is smooth network, a movement complexity corresponding to the current frame of picture is obtained. The encoding layer of the current frame of picture is determined based on the movement complexity.

That is, when the network status is smooth network, the encoder device obtains the movement complexity corresponding to the current frame of picture in real time, and obtains through division a plurality of complexity ranges based on a plurality of complexity thresholds with reference to a highest encoding layer supported by the encoder device, to determine the encoding layer of the current frame of picture based on a complexity range within which the movement complexity of the current frame of picture falls.

Based on the foregoing descriptions, the reference frame structure indicates the reference frame of picture of the current frame of picture and the encoding layer of the current frame of picture. Therefore, after the encoding layer of the current frame of picture is determined in the first manner or the second manner, the reference frame of picture of the current frame of picture further needs to be determined. For example, when the scene status of the current frame of picture is stable scene, it is determined that a latest frame of picture that is located before the current frame of picture, that is capable of being used as a reference frame, and whose encoding layer is less than or equal to the encoding layer of the current frame of picture is the reference frame of picture of the current frame of picture. When the scene status of the current frame of picture is any one of scene switching, scene flickering, or frequent scene switching, it is determined that a latest frame of picture that is located before the current frame of picture and that is capable of being used as a reference frame is the reference frame of picture of the current frame of picture.

Optionally, to improve encoding efficiency and effectively reduce bandwidth costs, after the reference frame structure corresponding to the current frame of picture is determined based on the scene status, frame discarding further needs to be performed on the current frame of picture based on the encoding layer corresponding to the current frame of picture and the scene status and/or the network status.

According to a second aspect, a video encoding apparatus is provided. The video encoding apparatus has a function of implementing behavior in the video encoding method in the first aspect. The video encoding apparatus includes at least one module. The at least one module is configured to implement the video encoding method provided in the first aspect.

According to a third aspect, a computing device cluster is provided. The computing device cluster includes at least one computing device, each computing device includes a processor and a memory, and a processor of the at least one computing device is configured to execute instructions stored in a memory of the at least one computing device, so that the computing device cluster performs the video encoding method provided in the first aspect.

Optionally, each computing device may further include a communication bus, and the communication bus is configured to establish a connection between the processor and the memory of each computing device.

According to a fourth aspect, a computer-readable storage medium is provided. The storage medium stores instructions, and when the instructions are run in a computing device cluster, the computing device cluster is enabled to perform steps of the video encoding method in the first aspect.

According to a fifth aspect, a computer program product including instructions is provided. When the instructions are run in a computing device cluster, the computing device cluster is enabled to perform steps of the video encoding method in the first aspect.

Technical effects achieved in the second aspect to the fifth aspect are similar to technical effects achieved by the corresponding technical means in the first aspect. Details are not described herein again.

### BRIEF DESCRIPTION OF DRAWINGS

FIG. 1 is a diagram of a video signal sequence according to an embodiment of this application;
FIG. 2 is a diagram of an IPPP reference frame structure according to an embodiment of this application;
FIG. 3 is a diagram of a hierarchical reference frame structure according to an embodiment of this application;
FIG. 4 is a diagram of a structure of an encoder device according to an embodiment of this application;
FIG. 5 is a flowchart of a video encoding method according to an embodiment of this application;
FIG. 6 is a diagram of determining a scene status of a current frame of picture according to an embodiment of this application;
FIG. 7 is a diagram of determining an encoding layer of a current frame of picture according to an embodiment of this application;
FIG. 8 is a diagram of switching a reference frame structure required for video signal encoding according to an embodiment of this application;
FIG. 9 is a diagram of a video encoding procedure according to an embodiment of this application;
FIG. 10 is a diagram of a reference frame structure according to an embodiment of this application;
FIG. 11 is a diagram of a structure of a video encoding apparatus according to an embodiment of this application;
FIG. 12 is a diagram of a structure of a computing device according to an embodiment of this application;
FIG. 13 is a diagram of an architecture of a computing device cluster according to an embodiment of this application; and
FIG. 14 is a diagram of a connection between computing devices according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before a video encoding method provided in embodiments of this application is described in detail, terms and service scenarios in embodiments of this application are first described.

For ease of understanding, the terms in embodiments of this application are first described.

A reference frame structure indicates an encoding order and a reference relationship between a plurality of frames of pictures included in a video signal, and is also referred to as a reference structure or an encoding structure.

An I frame is an internal-coded picture (intra-coded picture). Intra predictive coding is used for the I frame, that is, the I frame does not need to be encoded with reference to another frame of picture.

A P frame is a forward predictive-coded picture (predictive-coded picture), and is also referred to as a forward predictive frame or a forward reference frame. Inter predictive coding is used for the P frame, and a previous I frame/P frame in time domain is used as a reference frame of the P frame.

A B frame is a bidirectionally predictive-coded picture (bidirectionally predictive-coded picture), and is also referred to as a bidirectionally interpolated frame or a bidirectional reference frame. Inter predictive coding is used for the B frame, and a previous I frame/P frame/B frame in time domain and a next I frame/P frame/B frame in time domain are used as reference frames of the B frame.

Group of pictures (group of pictures, GOP): A video signal bit stream includes a plurality of GOPs. A GOP is a group of continuous pictures, including an I frame, a P frame, and/or a B frame, and is a basic unit for access by an encoder device and a decoder device. That is, after encoding a plurality of frames of pictures, the encoder device generates GOPs segment by segment, and the decoder device reads the GOPs segment by segment when playing a video signal. An arrangement order of the GOPs is repeated until the video signal ends.

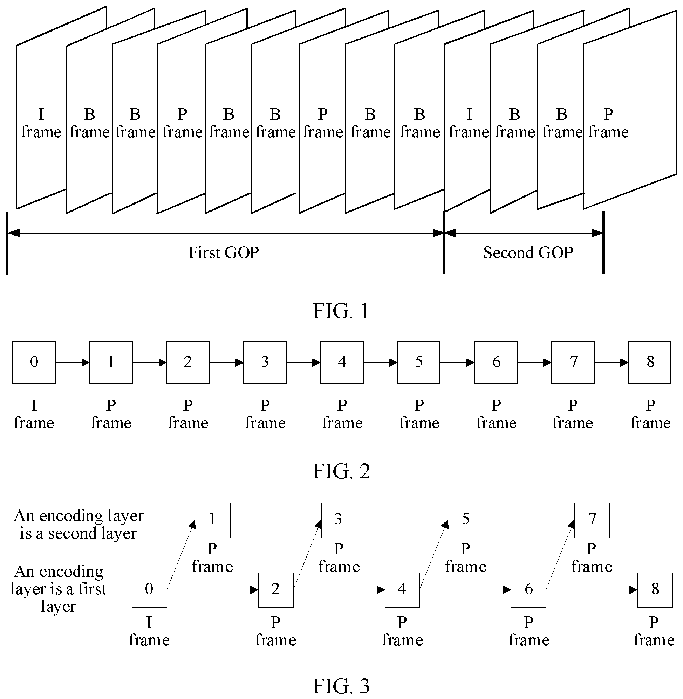

For example, FIG. 1 is a diagram of a video signal sequence according to an embodiment of this application. In FIG. 1, a video signal includes two GOPs: a first GOP and a second GOP, and each GOP includes one I frame, at least one B frame, and at least one P frame.

IPPP (I-frame-P-frame-P-frame-P-frame) reference frame structure: A video signal includes a plurality of frames of pictures, a first frame of picture in the plurality of frames of pictures is an I frame, and the remaining frames of pictures are all P frames. Intra predictive coding is performed on the I frame, and inter predictive coding is performed on the P frames. In addition, a reference frame of picture of each P frame is a previous frame of picture adjacent to the P frame in time domain.

For example, FIG. 2 is a diagram of an IPPP reference frame structure according to an embodiment of this application. In FIG. 2, one rectangle represents one frame of picture, and a video signal includes nine frames of pictures. A start point of an arrow is a reference frame of picture, and an end point of the arrow is a frame of picture to be encoded. A first frame of picture is an I frame, and the remaining frames are all P frames. A reference frame of picture of each P frame is a previous frame of picture adjacent to the P frame in time domain.

Hierarchical reference frame structure: A video signal includes a plurality of frames of pictures, a first frame of picture in the plurality of frames of pictures is an I frame, and the remaining frames of pictures are all P frames. A plurality of P frames included in the video signal are divided into a plurality of time domain layers, where the plurality of time domain layers respectively include P frames with different frame sequence numbers, and a reference frame of picture of each P frame is determined based on the hierarchical reference frame structure.

For example, FIG. 3 is a diagram of a hierarchical reference frame structure according to an embodiment of this application. In FIG. 3, a plurality of P frames included in a video signal are divided into two time domain layers. A first time domain layer includes an I frame whose frame sequence number is 0 and P frames whose frame sequence numbers are 2, 4, 6, and 8, and a second time domain layer includes P frames whose frame sequence numbers are 1, 3, 5, and 7. In other words, an encoding layer corresponding to the I frame whose frame sequence number is 0 and the P frames whose frame sequence numbers are 2, 4, 6, and 8 is a first layer, and an encoding layer corresponding to the P frames whose frame sequence numbers are 1, 3, 5, and 7 is a second layer. An encoder device allocates a large bit rate to a picture at a low encoding layer, and allocates a small bit rate to a picture at a high encoding layer.

Then, service scenarios in embodiments of this application are described.

The video encoding method provided in embodiments of this application can be applied to a plurality of scenarios. For example, in a live streaming scenario, a host side outputs a video signal. An encoder device collects the video signal output by the host side, to obtain the video signal in real time, and then encodes the video signal in real time according to the method provided in embodiments of this application, to compress the video signal transmitted by the host side to the encoder device into a binary bit stream.

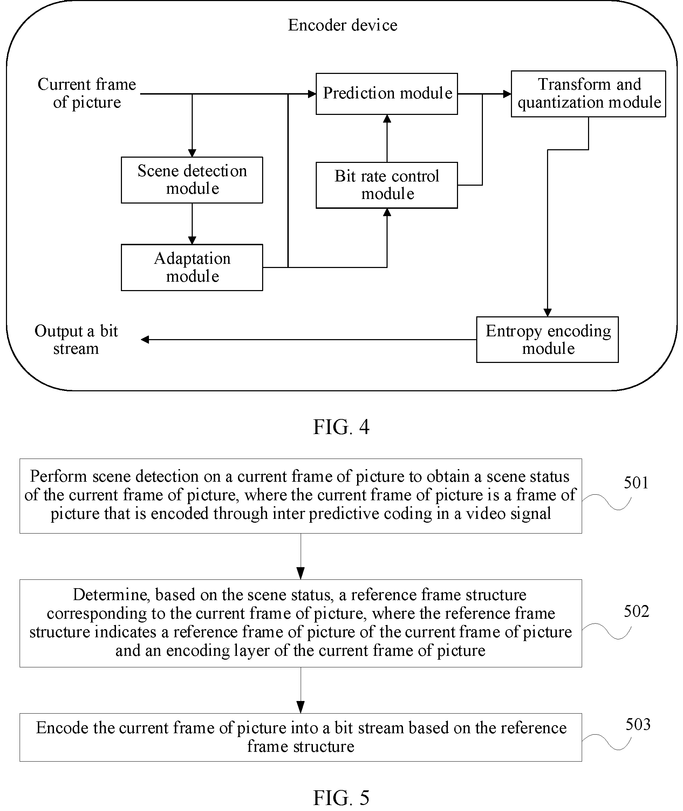

The video encoding method provided in embodiments of this application is performed by an encoder device. FIG. 4 is a diagram of a structure of an encoder device according to an embodiment of this application. The encoder device includes a scene detection module, an adaptation module, a bit rate control module, a prediction module, a transform and quantization module, and an entropy encoding module. The scene detection module is configured to perform scene detection on a current frame of picture to obtain a scene status of the current frame of picture. The adaptation module adaptively determines, based on the scene status output by the scene detection module, a reference frame structure corresponding to the current frame of picture, to obtain a reference frame of picture of the current frame of picture and an encoding layer of the current frame of picture. The bit rate control module allocates, to the current frame of picture based on the reference frame structure corresponding to the current frame of picture, a bit rate required for encoding. The prediction module is configured to perform inter prediction on the current frame of picture to obtain a predicted picture corresponding to the current frame of picture, to determine a difference between the current frame of picture and the predicted picture as a residual picture. The transform and quantization module is configured to transform and quantize the residual picture to obtain a transformed and quantized residual picture. The entropy encoding module is configured to perform entropy encoding on the transformed and quantized residual picture and output a bit stream.

The current frame of picture is a frame of picture that is being encoded by the encoder device, or a frame of picture that is being analyzed in a picture analysis queue, or a frame of picture that is being processed by another device. This is not limited in embodiments of this application.

It should be noted that the service scenarios described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with emergence of new service scenarios.

The following describes in detail the video encoding method provided in embodiments of this application. FIG. 5 is a flowchart of a video encoding method according to an embodiment of this application. Refer to FIG. 5. The method includes the following steps.

Step 501: Perform scene detection on a current frame of picture to obtain a scene status of the current frame of picture, where the current frame of picture is a frame of picture that is encoded through inter predictive coding in a video signal.

In some embodiments, the scene status of the current frame of picture is determined based on a frame difference between the current frame of picture and another frame of picture. To be specific, a first frame difference between the current frame of picture and a base frame of picture is calculated, where the base frame of picture is a frame of picture that is located before the current frame of picture and in which scene switching occurs last time. When the first frame difference is not greater than a first frame difference threshold, it is determined that the scene status is stable scene. A second frame difference between the current frame of picture and a window end frame of picture is calculated, where the window end frame of picture and the current frame of picture are located in a same detection window, and the window end frame of picture is a last frame of picture included in the detection window. When the first frame difference is greater than a first frame difference threshold and the second frame difference is not greater than a second frame difference threshold, it is determined that the scene status is scene switching. A third frame difference between the base frame of picture and the window end frame of picture is calculated. When the first frame difference is greater than a first frame difference threshold, the second frame difference is greater than a second frame difference threshold, and the third frame difference is not greater than a third frame difference threshold, it is determined that the scene status is scene flickering. When the first frame difference is greater than a first frame difference threshold, the second frame difference is greater than a second frame difference threshold, and the third frame difference is greater than a third frame difference threshold, it is determined that the scene status is frequent scene switching.

Because the base frame of picture is the frame of picture that is located before the current frame of picture and in which scene switching occurs last time, when the first frame difference is not greater than the first frame difference threshold, it indicates that a video scene of the current frame of picture does not greatly differ from a video scene of the base frame of picture. In other words, the current frame of picture and the base frame of picture belong to a same scene, and therefore, it is determined that the scene status of the current frame of picture is stable scene.

When the first frame difference is greater than the first frame difference threshold, it indicates that a video scene of the current frame of picture greatly differs from a video scene of the base frame of picture, and scene switching may occur in the current frame of picture. The second frame difference between the current frame of picture and the window end frame of picture further needs to be calculated, to accurately determine whether scene switching occurs in the current frame of picture. If the second frame difference is not greater than the second frame difference threshold, it indicates that the current frame of picture and the window end frame of picture belong to a same scene, but the current frame of picture and the base frame of picture belong to different scenes. Therefore, it is determined that the scene status of the current frame of picture is scene switching.

If the second frame difference is greater than the second frame difference threshold, it indicates that the current frame of picture and the window end frame of picture belong to different scenes, and the current frame of picture and the base frame of picture also belong to different scenes. The third frame difference between the base frame of picture and the window end frame of picture further needs to be calculated, to accurately determine whether scene flickering or frequent scene switching occurs in the current frame of picture. When the third frame difference is not greater than the third frame difference threshold, it indicates that the base frame of picture and the window end frame of picture belong to a same scene. In other words, after the current frame of picture temporarily switches to another scene, the current frame of picture switches back to a scene that is the same as that of the base frame of picture. Therefore, it is determined that the scene status of the current frame of picture is scene flickering.

When the third frame difference is greater than the third frame difference threshold, it indicates that the base frame of picture, the current frame of picture, and the window end frame of picture all belong to different scenes. Therefore, it is determined that the scene status of the current frame of picture is frequent scene switching.

A frame difference is an average value of absolute differences between pixel values of two frames of pictures. To be specific, an absolute difference between pixel values corresponding to a same pixel in two frames of pictures is calculated, to obtain an absolute difference. Then, pixels in the two frames of pictures are traversed to obtain a plurality of absolute differences, and an average value of the plurality of absolute differences is determined as a frame difference between the two frames of pictures.

The first frame difference threshold, the second frame difference threshold, the third frame difference threshold, and a detection length of the detection window are preset. In addition, the first frame difference threshold, the second frame difference threshold, the third frame difference threshold, and the detection length of the detection window may alternatively be adjusted based on different requirements. The first frame difference threshold, the second frame difference threshold, and the third frame difference threshold may be the same, or may be different. This is not limited in embodiments of this application.

In embodiments of this application, "being not greater than" may be understood as "being less than", or may be understood as "being less than or equal to". Similarly, "being not less than" mentioned below may be understood as "being greater than", or may be understood as "being greater than or equal to". When "being not greater than" is understood as "being less than", "being not less than" may be understood as "being greater than or equal to". When "being not greater than" is understood as "being less than or equal to", "being not less than" may be understood as "being greater than". For details about "being not greater than" and "being not less than" below, refer to this explanation.

Optionally, before scene detection is performed on the current frame of picture, the base frame of picture further needs to be determined. For example, the frame of picture that is located before the current frame of picture and in which scene switching occurs last time is used as the base frame of picture. During actual application, there may be a case in which no scene switching occurs in each frame of picture located before the current frame of picture. In this case, a 0^{th} frame of picture of the video signal obtained by an encoder device is used as the base frame of picture. To be specific, the 0^{th} frame of picture of the video signal is first used as the base frame of picture, and scene detection is sequentially performed on each frame of picture in the detection window. When the scene status of the current frame of picture is scene switching, the current frame of picture is updated to a base frame of picture, and a scene status of a subsequent frame of picture is determined based on the updated base frame of picture.

Optionally, after scene detection is performed on the current frame of picture, the detection window may be further slid backward, to continue to perform scene detection on a subsequent frame of picture. For example, the detection window may be slid backward one frame by one frame based on a frame sequence number. Alternatively, the entire detection window is slid backward based on the detection length. Certainly, during actual application, the detection window may alternatively be slid backward in another manner. This is not limited in embodiments of this application.

For example, the detection length of the detection window is 10 frames of pictures, a window start frame of picture is a 0^{th} frame of picture, a window end frame of picture is a 9^{th} frame of picture, the current frame of picture is a 6^{th} frame of picture, and the base frame of picture is the 0^{th} frame of picture. The scene status of the current frame of picture is determined by calculating a first frame difference between the 6^{th} frame of picture and the 0^{th} frame of picture, a second frame difference between the 6^{th} frame of picture and the 9^{th} frame of picture, and a third frame difference between the 0^{th} frame of picture and the 9^{th} frame of picture. After scene detection is performed on the 6^{th} frame of picture, the detection window is slid backward one frame by one frame based on the frame sequence number, that is, the window start end frame of picture changes to a 1^{st} frame of picture, and the window end frame of picture changes to a 10^{th} frame of picture. Alternatively, the entire detection window is slid backward based on the detection length, that is, the window start end frame of picture changes to a 7^{th} frame of picture, and the window end frame of picture changes to a 16^{th} frame of picture.

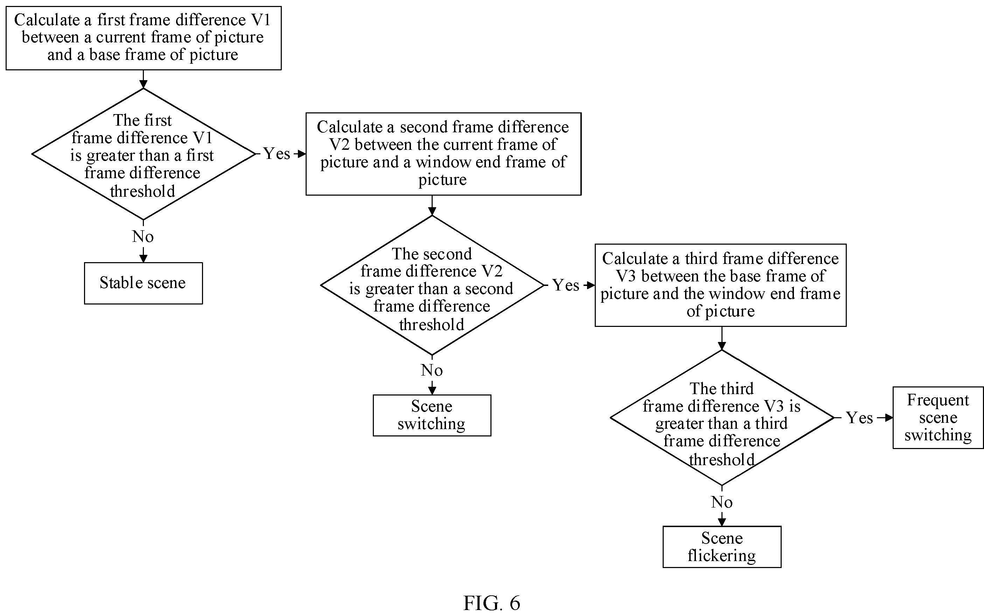

For example, FIG. 6 is a diagram of determining a scene status of a current frame of picture according to an embodiment of this application. In FIG. 6, the first frame difference V1 between the current frame of picture and the base frame of picture is calculated, and when the first frame difference V1 is not greater than the first frame difference threshold, it is determined that the scene status is stable scene. When the first frame difference V1 is greater than the first frame difference threshold, the second frame difference V2 between the current frame of picture and the window end frame of picture is calculated. If the second frame difference V2 is not greater than the second frame difference threshold, it is determined that the scene status is scene switching. If the second frame difference V2 is greater than the second frame difference threshold, the third frame difference V3 between the base frame of picture and the window end frame of picture is calculated. If the third frame difference V3 is not greater than the third frame difference threshold, it is determined that the scene status is scene flickering. If the third frame difference V3 is greater than the third frame difference threshold, it is determined that the scene status is frequent scene switching.

It should be noted that determining the scene status of the current frame of picture based on the frame difference between the current frame of picture and the another frame of picture is merely an example. In some other embodiments, the scene status of the current frame of picture can alternatively be determined according to another method. For example, the scene status of the current frame of picture is determined based on pixel distribution between the current frame of picture and the another frame of picture. To be specific, a first pixel distribution difference between the current frame of picture and the base frame of picture, a second pixel distribution difference between the current frame of picture and the window end frame of picture, and a third pixel distribution difference between the base frame of picture and the window end frame of picture are calculated separately. Then, the scene status of the current frame of picture is determined based on the first pixel distribution difference, the second pixel distribution difference, and the third pixel distribution difference. For another example, the scene status of the current frame of picture is determined based on a degree of movement between the current frame of picture and the another frame of picture. To be specific, a degree difference of movement between the current frame of picture and a previous frame of picture adjacent to the current frame of picture is determined, to obtain a first movement coefficient; and a degree difference of movement between the current frame of picture and a next frame of picture adjacent to the current frame of picture is determined, to obtain a second movement coefficient. Then, the scene status of the current frame of picture is determined based on the first movement coefficient and the second movement coefficient.

Optionally, after scene detection is performed on the current frame of picture to obtain the scene status of the current frame of picture, the scene status can be further stored. In addition, the encoder device can further store information such as a pixel value, a residual, a pixel histogram, and a motion vector of the current frame of picture. Similarly, the encoder device can also store information such as scene statuses, pixel values, residuals, pixel histograms, and motion vectors of the base frame of picture and the window end frame of picture.

Step 502: Determine, based on the scene status, a reference frame structure corresponding to the current frame of picture, where the reference frame structure indicates a reference frame of picture of the current frame of picture and an encoding layer of the current frame of picture.

Based on the foregoing descriptions, the scene status includes stable scene, scene switching, scene flickering, or frequent scene switching. In different cases, a process of determining, based on the scene status, the reference frame structure corresponding to the current frame of picture varies. The following describes four cases separately.

In a first case, when the scene status is stable scene, it is determined that the reference frame structure corresponding to the current frame of picture is a hierarchical reference structure or an IPPP structure.

When the reference frame structure corresponding to the current frame of picture is the IPPP structure, it is determined that a latest frame of picture that is located before the current frame of picture and that is capable of being used as a reference frame is the reference frame of picture of the current frame of picture.

Optionally, whether each frame of picture located before the current frame of picture is capable of being used as the reference frame is determined based on a group to which each frame of picture belongs. If a group to which a frame of picture belongs is a first group of pictures, it is determined that the frame of picture is capable of being used as the reference frame. If a group to which a frame of picture belongs is a second group of pictures, it is determined that the frame of picture is incapable of being used as the reference frame. In other words, an encoding layer of each frame of picture in the first group of pictures is less than a highest encoding layer supported by the encoder device, and an encoding layer of each frame of picture in the second group of pictures is equal to the highest encoding layer supported by the encoder device. Therefore, after it is determined that the reference frame structure corresponding to the current frame of picture is the IPPP structure, a frame of picture closest to the current frame of picture is directly selected from the first group of pictures as the reference frame of picture of the current frame of picture.

When the reference frame structure corresponding to the current frame of picture is the hierarchical reference structure, an encoding layer of the hierarchical reference structure corresponding to the current frame of picture further needs to be determined. During actual application, the encoder device can determine the encoding layer corresponding to the current frame of picture in different manners. The following describes two manners separately.

In a first manner, a movement complexity of the current frame of picture is calculated, and the encoding layer of the hierarchical reference structure corresponding to the current frame of picture is determined based on the movement complexity.

In some embodiments, the encoder device calculates the movement complexity of the current frame of picture according to a block matching algorithm (block matching algorithm, BMA). Certainly, during actual application, the movement complexity of the current frame of picture may alternatively be calculated in another manner, for example, according to a matlab algorithm. This is not limited in embodiments of this application.

For example, the encoder device supports a maximum of three encoding layers. When the movement complexity is less than a first complexity threshold, it is determined that the encoding layer of the current frame of picture is a third layer. When the movement complexity is greater than or equal to a first complexity threshold and the movement complexity is less than a second complexity threshold, it is determined that the encoding layer of the current frame of picture is a second layer. When the movement complexity is greater than or equal to a second complexity threshold, it is determined that the encoding layer of the current frame of picture is a first layer.

The first complexity threshold and the second complexity threshold are preset. In addition, the first complexity threshold and the second complexity threshold may alternatively be adjusted based on different requirements, provided that the second complexity threshold is greater than the first complexity threshold.

It should be noted that the foregoing content is described by using an example in which the encoder device supports a maximum of three encoding layers. To be specific, when the encoder device supports a maximum of three encoding layers, three complexity ranges are obtained through division based on the two complexity thresholds: the first complexity threshold and the second complexity threshold, and the encoding layer of the current frame of picture is determined based on a complexity range within which the movement complexity of the current frame of picture falls. Certainly, during actual application, the encoder device may support a hierarchical reference structure with a maximum of two encoding layers, four encoding layers, or more encoding layers. In this way, when the encoding layer of the current frame of picture is determined based on the movement complexity, a plurality of complexity ranges need to be obtained through division based on a plurality of complexity thresholds with reference to the highest encoding layer supported by the encoder device, so that the encoding layer of the current frame of picture is determined based on the complexity range within which the movement complexity of the current frame of picture falls.

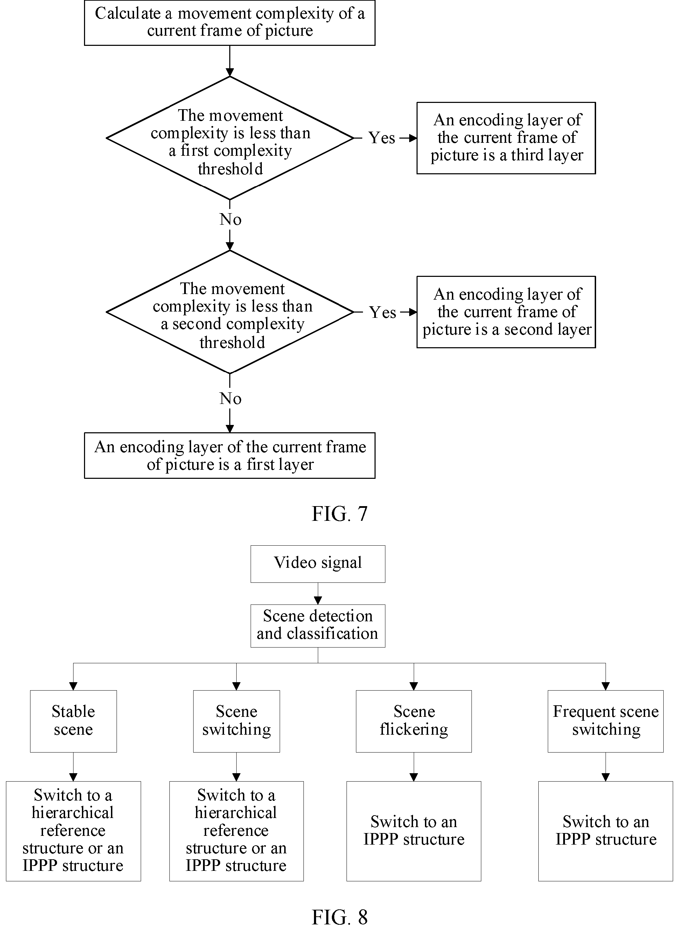

For example, FIG. 7 is a diagram of determining an encoding layer of a current frame of picture according to an embodiment of this application. In FIG. 7, the encoder device supports a maximum of three encoding layers. The movement complexity of the current frame of picture is calculated. When the movement complexity is less than the first complexity threshold, it is determined that the encoding layer of the current frame of picture is a third layer. When the movement complexity is greater than or equal to the first complexity threshold and the movement complexity is less than a second complexity threshold, it is determined that the encoding layer of the current frame of picture is a second layer. When the movement complexity is greater than or equal to the second complexity threshold, it is determined that the encoding layer of the current frame of picture is a first layer.

In a second manner, a current network status and a current network bandwidth are obtained, and an encoding layer of the hierarchical reference structure corresponding to the current frame of picture is determined based on the network status and the network bandwidth.

The current network status and the current network bandwidth are obtained by analyzing a network environment in real time. To be specific, the current network bandwidth is obtained in real time, and the obtained network bandwidth is compared with a preset target bandwidth. When the obtained network bandwidth is less than the target bandwidth, it is determined that the current network status is congested network. When the obtained network bandwidth is not less than the target bandwidth, it is determined that the current network status is smooth network. In this way, the current network status and the current network bandwidth are sensed in real time, and the encoding layer of the current frame of picture is flexibly determined with reference to the current network status and the current network bandwidth, to implement bit rate control. This reduces network bandwidth costs and improves video encoding efficiency.

Generally, the network status includes congested network and smooth network. When the network status is congested network, the encoding layer of the current frame of picture is determined based on the network bandwidth, a first bandwidth threshold, and a second bandwidth threshold, where the second bandwidth threshold is greater than the first bandwidth threshold.

For example, the encoder device supports a maximum of three encoding layers. When the network bandwidth is less than the first bandwidth threshold, it is determined that the encoding layer of the current frame of picture is a third layer. When the network bandwidth is greater than or equal to the first bandwidth threshold and the network bandwidth is less than the second bandwidth threshold, it is determined that the encoding layer of the current frame of picture is a second layer. When the network bandwidth is greater than or equal to the second bandwidth threshold, it is determined that the encoding layer of the current frame of picture is a first layer.

In other words, the first bandwidth threshold and the second bandwidth threshold are obtained through division with reference to the highest encoding layer supported by the encoder device. When the network status is congested network, the obtained network bandwidth is compared with the first bandwidth threshold and the second bandwidth threshold to determine the encoding layer of the current frame of picture.

The first bandwidth threshold and the second bandwidth threshold are preset. In addition, the first bandwidth threshold and the second bandwidth threshold may alternatively be adjusted based on different requirements, provided that the second bandwidth threshold is greater than the first bandwidth threshold.

Based on the foregoing descriptions, the network status includes congested network and smooth network. When the network status is smooth network, the movement complexity corresponding to the current frame of picture is obtained. The encoding layer of the current frame of picture is determined based on the movement complexity.

That is, when the network status is smooth network, the encoder device obtains the movement complexity corresponding to the current frame of picture in real time, and obtains through division a plurality of complexity ranges based on a plurality of complexity thresholds with reference to the highest encoding layer supported by the encoder device, to determine the encoding layer of the current frame of picture based on a complexity range within which the movement complexity of the current frame of picture falls.

When the network status is smooth network, the process of determining the encoding layer of the current frame of picture is similar to the process of the first manner. Therefore, refer to related content of the first manner. Details are not described herein again.

Optionally, after the encoding layer of the current frame of picture is determined in the first manner or the second manner, whether the current frame of picture is capable of being used as the reference frame further needs to be determined based on the encoding layer of the current frame of picture and the highest encoding layer supported by the encoder device. For example, the encoding layer of the current frame of picture is compared with the highest encoding layer supported by the encoder device. If the encoding layer of the current frame of picture is less than the highest encoding layer supported by the encoder device, it is determined that the current frame of picture is capable of being used as the reference frame, and the current frame of picture is placed in the first group of pictures. If the encoding layer of the current frame of picture is equal to the highest encoding layer supported by the encoder device, it is determined that the current frame of picture is incapable of being used as the reference frame, and the current frame of picture is placed in the second group of pictures.

Based on the foregoing descriptions, the reference frame structure indicates the reference frame of picture of the current frame of picture and the encoding layer of the current frame of picture. Therefore, after the encoding layer of the current frame of picture is determined in the first manner or the second manner, the reference frame of picture of the current frame of picture further needs to be determined. In some embodiments, it is determined that a latest frame of picture that is located before the current frame of picture, that is capable of being used as the reference frame, and whose encoding layer is less than or equal to the encoding layer of the current frame of picture is the reference frame of picture of the current frame of picture.

In other words, after the encoding layer of the current frame of picture is determined, a frame of picture whose encoding layer is less than or equal to the encoding layer of the current frame of picture and that is closest to the current frame of picture is selected from the mentioned first group of pictures as the reference frame of picture of the current frame of picture.

In a second case, when the scene status is scene switching, it is determined that the reference frame structure corresponding to the current frame of picture is a hierarchical reference structure or an IPPP structure.

When the reference frame structure corresponding to the current frame of picture is the IPPP structure, it is determined that a latest frame of picture that is located before the current frame of picture and that is capable of being used as a reference frame is the reference frame of picture of the current frame of picture.

When the reference frame structure corresponding to the current frame of picture is the hierarchical reference structure, an encoding layer of the hierarchical reference structure corresponding to the current frame of picture further needs to be determined. In some embodiments, a movement complexity of the current frame of picture is calculated, and the encoding layer of the hierarchical reference structure corresponding to the current frame of picture is determined based on the movement complexity. In some other embodiments, a current network status and a current network bandwidth are obtained, and an encoding layer of the hierarchical reference structure corresponding to the current frame of picture is determined based on the network status and the network bandwidth.

A process of determining the encoding layer of the current frame of picture based on the movement complexity is similar to the process of the first manner in the first case. Therefore, refer to related content of the first manner. Details are not described herein again. A process of determining the encoding layer of the current frame of picture based on the network status and the network bandwidth is similar to the process of the second manner in the first case. Therefore, refer to related content of the second manner. Details are not described herein again.

Similarly, after the encoding layer of the current frame of picture is determined in the first manner or the second manner, the latest frame of picture that is located before the current frame of picture and that is capable of being used as the reference frame is directly determined as the reference frame of picture of the current frame of picture.

In a third case, when the scene status is scene flickering, it is determined that the reference frame structure corresponding to the current frame of picture is an IPPP structure.

When the reference frame structure corresponding to the current frame of picture is the IPPP structure, it is determined that a latest frame of picture that is located before the current frame of picture and that is capable of being used as a reference frame is the reference frame of picture of the current frame of picture.

In a fourth case, when the scene status is frequent scene switching, it is determined that the reference frame structure corresponding to the current frame of picture is an IPPP structure.

When the reference frame structure corresponding to the current frame of picture is the IPPP structure, it is determined that a latest frame of picture that is located before the current frame of picture and that is capable of being used as a reference frame is the reference frame of picture of the current frame of picture.

The foregoing content is described to determine, in different manners when the scene status of the current frame of picture varies, the reference frame structure corresponding to the current frame of picture. The following uses FIG. 8 as an example to describe a process of determining, based on the scene status, the reference frame structure corresponding to the current frame of picture according to an embodiment of this application.

For example, FIG. 8 is a diagram of switching a reference frame structure required for video signal encoding according to an embodiment of this application. In FIG. 8, the encoder device obtains a video signal, and sequentially performs scene detection on each frame of picture included in the video signal, to obtain a scene status of each frame of picture. When a scene status of a frame of picture is stable scene, a reference frame structure corresponding to the frame of picture switches to a hierarchical reference structure or an IPPP structure. When a scene status of a frame of picture is scene switching, a reference frame structure corresponding to the frame of picture switches to a hierarchical reference structure or an IPPP structure. When a scene status of a frame of picture is scene flickering, a reference frame structure corresponding to the frame of picture switches to an IPPP structure. When a scene status of a frame of picture is frequent scene switching, a reference frame structure corresponding to the frame of picture switches to an IPPP structure.

In other words, for each frame of picture that is included in the video signal and that needs to be encoded through inter predictive coding, the encoder device can first determine a scene status of the frame of picture according to step 501, and then determine, according to step 502, a reference frame structure corresponding to the frame of picture in real time. A similarity between a video scene of the frame of picture and a video scene of another frame of picture is sensed, so that a reference frame structure required for video signal encoding flexibly switches, without considering whether a GOP to which the frame of picture belongs ends or considering a type of the frame of picture.

Optionally, to improve encoding efficiency and effectively reduce bandwidth costs, after the reference frame structure corresponding to the current frame of picture is determined based on the scene status, frame discarding further needs to be performed on the current frame of picture based on the encoding layer corresponding to the current frame of picture and the scene status and/or the network status. For example, when the encoding layer corresponding to the current frame of picture is the highest encoding layer, and the scene status of the current frame of picture is stable scene, frame discarding is performed on the current frame of picture. For another example, when the encoding layer corresponding to the current frame of picture is the highest encoding layer, and the current network status is congested network, frame discarding is performed on the current frame of picture. For another example, when the encoding layer corresponding to the current frame of picture is the highest encoding layer, the scene status of the current frame of picture is stable scene, and the current network status is congested network, frame discarding is performed on the current frame of picture.

Generally, a small bit rate is allocated by the encoder device to the highest encoding layer. As a result, an encoding effect of a picture at the highest encoding layer is poor. If the scene status of the current frame of picture is stable scene, it indicates that the current frame of picture does not greatly differ from another adjacent frame of picture. In this case, a decoder device can completely reconstruct the current frame of picture based on the another adjacent frame of picture, and therefore, frame discarding is performed on the current frame of picture. If the current network status is congested network, the current frame of picture at the highest encoding layer is actively discarded, to ensure that another reference frame of picture with a good encoding effect can be transmitted to the decoder device successfully, and effectively reduce an uplink/downlink traffic bandwidth.

Step 503: Encode the current frame of picture into a bit stream based on the reference frame structure.

The encoder device encodes a reference frame index corresponding to the current frame of picture into the bit stream, where the reference frame index indicates the reference frame of picture of the current frame of picture. The encoder device transmits the bit stream to the decoder device. After receiving the bit stream, the decoder device parses the bit stream to obtain the reference frame index corresponding to the current frame of picture, and further reconstructs the current frame of picture based on the reference frame of picture indicated by the reference frame index.

In some embodiments, the reference frame index includes a frame sequence number of the reference frame of picture. In this way, after obtaining the reference frame index corresponding to the current frame of picture by parsing the bit stream, the decoder device may directly determine a picture whose frame sequence number is the same as the reference frame index as the reference frame of picture of the current frame of picture. In some other embodiments, the reference frame index includes a difference between a frame sequence number of the current frame of picture and a frame sequence number of the reference frame of picture. In this way, after obtaining the reference frame index corresponding to the current frame of picture by parsing the bit stream, the decoder device further needs to determine the reference frame of picture of the current frame of picture based on the frame sequence number and the reference frame index of the current frame of picture.

Certainly, during actual application, the reference frame index may alternatively be another type of information, provided that the reference frame index can indicate the reference frame of picture of the current frame of picture. This is not limited in embodiments of this application.

The encoder device can transmit the bit stream to the decoder device in a plurality of manners. For example, the encoder device pushes the bit stream to a cloud in an uplink, and the decoder device pulls the bit stream from the cloud in a downlink. In other words, the encoder device transmits the bit stream to the decoder device through the cloud. During actual application, the encoder device can further transmit the bit stream to the decoder device in another manner. This is not limited in embodiments of this application.

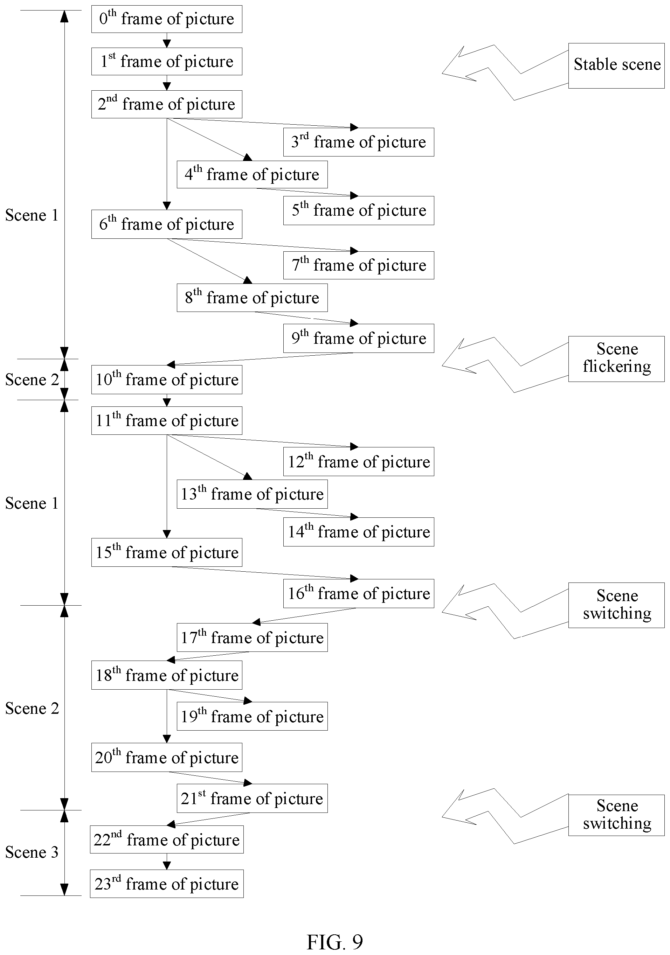

The following uses FIG. 9 as an example to describe a complete video signal encoding procedure provided in embodiments of this application. It is assumed that the encoder device supports a maximum of four encoding layers. In FIG. 9, reference frame structures corresponding to a 0^{th} frame of picture and a 1^{st} frame of picture are IPPP structures, and a reference frame of picture of the 1^{st} frame of picture is the 0^{th} frame of picture. When a scene status of a 2^{nd} frame of picture is stable scene, a reference frame structure corresponding to the 2^{nd} frame of picture switches to a three-layer hierarchical reference structure, where an encoding layer of the 2^{nd} frame of picture is a first layer, and a reference frame of picture of the 2^{nd} frame of picture is the 1^{st} frame of picture.

When a scene status of a 10^{th} frame of picture is scene flickering, that is, a 9^{th} frame of picture belongs to a scene 1, the 10^{th} frame of picture belongs to a scene 2, and an 11^{th} frame of picture belongs to the scene 1, a reference frame structure corresponding to the 10^{th} frame of picture switches to an IPPP structure, a reference frame of picture of the 10^{th} frame of picture is the 9^{th} frame of picture, and a reference frame structure corresponding to the 11^{th} frame of picture switches to a three-layer hierarchical reference structure.

When a scene status of a 17^{th} frame of picture is scene switching, that is, a 16^{th} frame of picture belongs to the scene 1, and the 17^{th} frame of picture belongs to the scene 2, a reference frame structure corresponding to the 17^{th} frame of picture switches to a two-layer hierarchical reference structure, where an encoding layer of the 17^{th} frame of picture is a second layer, and a reference frame of picture of the 17^{th} frame of picture is the 16^{th} frame of picture.

When a scene status of a 22^{nd} frame of picture is scene switching, that is, a 21^{st} frame of picture belongs to the scene 2, and the 22^{nd} frame of picture belongs to a scene 3, a reference frame structure corresponding to the 22^{nd} frame of picture switches to an IPPP structure, and a reference frame of picture of the 22^{nd} frame of picture is the 21^{st} frame of picture. Then, the encoder device encodes a video signal into a bit stream based on the reference frame structure shown in FIG. 5, and transmits the bit stream to the decoder device. The decoder device receives the bit stream, and reconstructs the video signal according to a related algorithm, so that the decoder device plays the video signal.

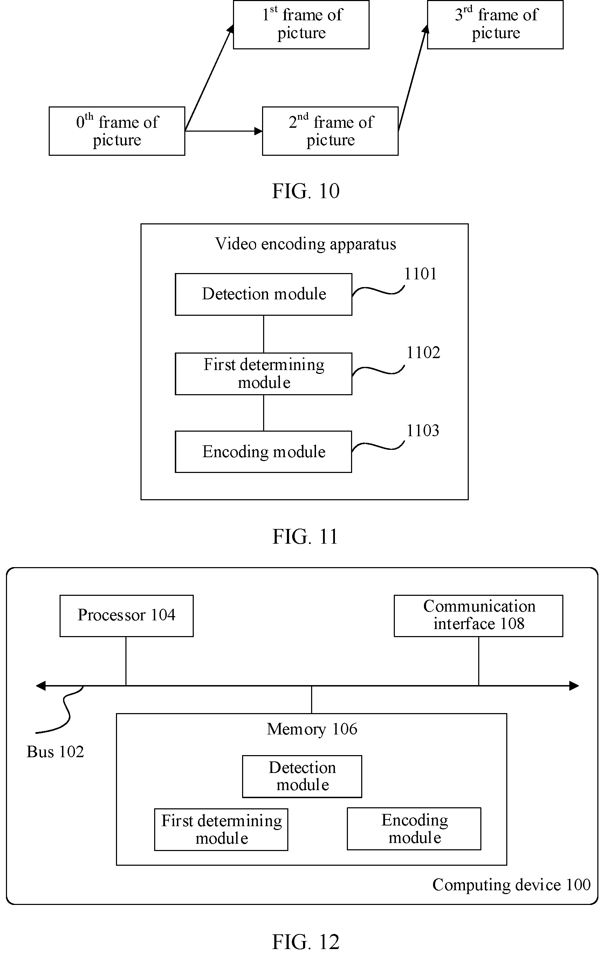

Optionally, after receiving the bit stream, the decoder device can further view and infer, through a bit stream analysis tool, a reference frame structure corresponding to each frame of picture included in the video signal. For example, the bit stream received by the decoder device is a bit stream in a 265 standard format. Therefore, the decoder device parses the received bit stream through a 265 bit stream analysis tool. It is assumed that the 1^{st} frame of picture includes a reference frame list, a sequence number of the reference frame list is 0, and the reference frame of picture of the 1^{st} frame of picture is the 0^{th} frame of picture; the 2^{nd} frame of picture includes a reference frame list, a sequence number of the reference frame list is 0, and the reference frame of picture of the 2^{nd} frame of picture is the 0^{th} frame of picture; and a 3^{rd} frame of picture includes a reference frame list, a sequence number of the reference frame list is 0, and a reference frame of picture of the 3^{rd} frame of picture is the 2^{nd} frame of picture. Therefore, reference frame structures of the 0^{th} frame of picture to the 3^{rd} frame of picture obtained through inference are shown in FIG. 10.

Certainly, during actual application, the decoder device can further view other encoding information, for example, a decoding buffer list corresponding to each frame of picture, through the bit stream analysis tool. This is not limited in embodiments of this application.

In embodiments of this application, the scene status of the current frame of picture is sensed by detecting a video scene of the current frame of picture. The reference frame structure corresponding to the current frame of picture is adaptively determined based on a feature of content of the video scene of the current frame of picture. In this way, in a process of encoding a video, a reference frame of picture and an encoding layer of each frame of picture are adjusted in real time with reference to features such as whether scene switching occurs or whether a scene is kept stable in each frame of picture, to flexibly switch the reference frame structure in the encoding process, and improve frame-level parallelism and video encoding efficiency. To be specific, for video scene content such as stable scene, scene switching, scene flickering, or frequent scene switching, a hierarchical reference structure is adaptively enabled/disabled/adjusted, and a reference frame structure is dynamically determined for each frame of picture, to ensure that in different scene statuses, a reference frame of picture with high quality can be used to guide encoding of a current frame of picture, to improve a reconstruction effect of the current frame of picture.

In addition, with reference to a network status and a network bandwidth, an encoding layer of the current frame of picture is flexibly determined, a large bit rate is allocated to a picture at a low encoding layer, and a small bit rate is allocated to a picture at a high encoding layer. In this way, a bit rate control policy can be used to reduce network bandwidth costs and improve video encoding efficiency. In addition, in a manner of actively discarding a frame, real-time transmission of a bit stream from the encoder device to the decoder device can be ensured, and a phenomenon, for example, a delay or frame freezing that occurs on the decoder device, that causes the decoder device to fail to provide a normal live interactive video service, and that affects customer experience can be avoided.

FIG. 11 is a diagram of a structure of a video encoding apparatus according to an embodiment of this application. The video encoding apparatus may be implemented as a part or all of an encoder device by software, hardware, or a combination thereof. Refer to FIG. 11. The apparatus includes a detection module 1101, a first determining module 1102, and an encoding module 1103.

The detection module 1101 is configured to perform scene detection on a current frame of picture to obtain a scene status of the current frame of picture, where the current frame of picture is a frame of picture that is encoded through inter predictive coding in a video signal. For a detailed implementation process, refer to corresponding content in the foregoing embodiments. Details are not described herein again.

The first determining module 1102 is configured to determine, based on the scene status, a reference frame structure corresponding to the current frame of picture, where the reference frame structure indicates a reference frame of picture of the current frame of picture and an encoding layer of the current frame of picture. For a detailed implementation process, refer to corresponding content in the foregoing embodiments. Details are not described herein again.

The encoding module 1103 is configured to encode the current frame of picture into a bit stream based on the reference frame structure. For a detailed implementation process, refer to corresponding content in the foregoing embodiments. Details are not described herein again.

Optionally, the detection module 1101 is specifically configured to:
calculate a first frame difference between the current frame of picture and a base frame of picture, where the base frame of picture is a frame of picture that is located before the current frame of picture and in which scene switching occurs last time; and
when the first frame difference is not greater than a first frame difference threshold, determine that the scene status is stable scene.

The first determining module 1102 is specifically configured to:
based on that the scene status is stable scene, determine that the reference frame structure corresponding to the current frame of picture is a hierarchical reference structure or an IPPP structure.

Optionally, the detection module 1101 is specifically configured to:
calculate a first frame difference between the current frame of picture and a base frame of picture, where the base frame of picture is a frame of picture that is located before the current frame of picture and in which scene switching occurs last time;
calculate a second frame difference between the current frame of picture and a window end frame of picture, where the window end frame of picture and the current frame of picture are located in a same detection window, and the window end frame of picture is a last frame of picture included in the detection window; and
when the first frame difference is greater than a first frame difference threshold, and the second frame difference is not greater than a second frame difference threshold, determine that the scene status is scene switching.

The first determining module 1102 is specifically configured to:
based on that the scene status is scene switching, determine that the reference frame structure corresponding to the current frame of picture is a hierarchical reference structure or an IPPP structure.

Optionally, the detection module 1101 is specifically configured to:
calculate a first frame difference between the current frame of picture and a base frame of picture, where the base frame of picture is a frame of picture that is located before the current frame of picture and in which scene switching occurs last time;
calculate a second frame difference between the current frame of picture and a window end frame of picture, where the window end frame of picture and the current frame of picture are located in a same detection window, and the window end frame of picture is a last frame of picture included in the detection window;
calculate a third frame difference between the base frame of picture and the window end frame of picture; and
when the first frame difference is greater than a first frame difference threshold, the second frame difference is greater than a second frame difference threshold, and the third frame difference is not greater than a third frame difference threshold, determine that the scene status is scene flickering.

The first determining module 1102 is specifically configured to:
based on that the scene status is scene flickering, determine that the reference frame structure corresponding to the current frame of picture is an IPPP structure.

Optionally, the detection module 1101 is specifically configured to:
calculate a first frame difference between the current frame of picture and a base frame of picture, where the base frame of picture is a frame of picture that is located before the current frame of picture and in which scene switching occurs last time;
calculate a second frame difference between the current frame of picture and a window end frame of picture, where the window end frame of picture and the current frame of picture are located in a same detection window, and the window end frame of picture is a last frame of picture included in the detection window;
calculate a third frame difference between the base frame of picture and the window end frame of picture; and
when the first frame difference is greater than a first frame difference threshold, the second frame difference is greater than a second frame difference threshold, and the third frame difference is greater than a third frame difference threshold, determine that the scene status is frequent scene switching.

The first determining module 1102 is specifically configured to:
based on that the scene status is frequent scene switching, determine that the reference frame structure corresponding to the current frame of picture is an IPPP structure.

Optionally, the apparatus further includes:
a calculation module, configured to calculate a movement complexity of the current frame of picture; and
a second determining module, configured to determine, based on the movement complexity, an encoding layer of the hierarchical reference structure corresponding to the current frame of picture.

Optionally, the encoder device supports a maximum of three encoding layers. The second determining module is specifically configured to:
when the movement complexity is less than a first complexity threshold, determine that the encoding layer of the current frame of picture is a third layer;
when the movement complexity is greater than or equal to a first complexity threshold and the movement complexity is less than a second complexity threshold, determine that the encoding layer of the current frame of picture is a second layer, where the second complexity threshold is greater than the first complexity threshold; or
when the movement complexity is greater than or equal to a second complexity threshold, determine that the encoding layer of the current frame of picture is a first layer.

Optionally, the apparatus further includes:
a first obtaining module, configured to obtain a current network status and a current network bandwidth; and
a third determining module, configured to determine, based on the network status and the network bandwidth, an encoding layer of the hierarchical reference structure corresponding to the current frame of picture.

Optionally, the encoder device supports a maximum of three encoding layers. The third determining module includes:
a determining unit, configured to: when the network status is congested network, determine the encoding layer of the current frame of picture based on the network bandwidth, a first bandwidth threshold, and a second bandwidth threshold, where the second bandwidth threshold is greater than the first bandwidth threshold.

Optionally, the determining unit is specifically configured to:
when the network bandwidth is less than the first bandwidth threshold, determine that the encoding layer of the current frame of picture is a third layer;
when the network bandwidth is greater than or equal to the first bandwidth threshold and the network bandwidth is less than the second bandwidth threshold, determine that the encoding layer of the current frame of picture is a second layer; or
when the network bandwidth is greater than or equal to the second bandwidth threshold, determine that the encoding layer of the current frame of picture is a first layer.

Optionally, the apparatus further includes:
a second obtaining module, configured to: when the network status is smooth network, obtain a movement complexity corresponding to the current frame of picture; and
a fourth determining module, configured to determine the encoding layer of the current frame of picture based on the movement complexity.

Optionally, the apparatus further includes:
a fifth determining module, configured to determine that a latest frame of picture that is located before the current frame of picture, that is capable of being used as a reference frame, and whose encoding layer is less than or equal to the encoding layer of the current frame of picture is the reference frame of picture of the current frame of picture.

Optionally, the apparatus further includes:
a sixth determining module, configured to determine that a latest frame of picture that is located before the current frame of picture and that is capable of being used as a reference frame is the reference frame of picture of the current frame of picture.

Optionally, the apparatus further includes:
a frame discarding module, configured to perform frame discarding on the current frame of picture based on the encoding layer corresponding to the current frame of picture and the scene status and/or a network status.

In embodiments of this application, the scene status of the current frame of picture is sensed by detecting a video scene of the current frame of picture. The reference frame structure corresponding to the current frame of picture is adaptively determined based on a feature of content of the video scene of the current frame of picture. In this way, in a process of encoding a video, a reference frame of picture and an encoding layer of each frame of picture are adjusted in real time with reference to features such as whether scene switching occurs or whether a scene is kept stable in each frame of picture, to flexibly switch the reference frame structure in the encoding process, and improve frame-level parallelism and video encoding efficiency. To be specific, for video scene content such as stable scene, scene switching, scene flickering, or frequent scene switching, a hierarchical reference structure is adaptively enabled/disabled/adjusted, and a reference frame structure is dynamically determined for each frame of picture, to ensure that in different scene statuses, a reference frame of picture with high quality can be used to guide encoding of a current frame of picture, to improve a reconstruction effect of the current frame of picture.

In addition, with reference to a network status and a network bandwidth, an encoding layer of the current frame of picture is flexibly determined, a large bit rate is allocated to a picture at a low encoding layer, and a small bit rate is allocated to a picture at a high encoding layer. In this way, a bit rate control policy can be used to reduce network bandwidth costs and improve video encoding efficiency. In addition, in a manner of actively discarding a frame, real-time transmission of a bit stream from the encoder device to the decoder device can be ensured, and a phenomenon, for example, a delay or frame freezing that occurs on the decoder device, that causes the decoder device to fail to provide a normal live interactive video service, and that affects customer experience can be avoided.

It should be noted that, when the video encoding apparatus provided in the foregoing embodiments performs video encoding, division into the foregoing function modules is merely used as an example for description. During actual application, the foregoing functions may be allocated to different function modules for implementation based on a requirement. In other words, an internal structure of the apparatus is divided into different function modules to implement all or some of the functions described above. In addition, the video encoding apparatus provided in the foregoing embodiments and the video encoding method embodiments belong to a same concept. For a specific implementation process of the video encoding apparatus, refer to the method embodiments for details. Details are not described herein again.

The detection module, the first determining module, and the encoding module in the video encoding apparatus shown in FIG. 11 may be implemented by software, or may be implemented by hardware, or may be implemented by a combination of the software and the hardware. The following uses the detection module as an example to describe an implementation of the detection module. Similarly, for an implementation of the foregoing another module, refer to the implementation of the detection module.

The module is used as an example of a software function unit, and the detection module may include code run on a computing instance. The computing instance may include at least one of a physical host, a virtual machine, and a container. Further, there may be one or more computing instances. For example, the detection module may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same available zone (available zone, AZ), or may be distributed in different AZs. Each AZ includes one data center or a plurality of data centers with similar geographical locations. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or cross-region communication between VPCs in different regions. Interconnection between VPCs is implemented through the communication gateway.

The module is used as an example of a hardware function unit, and the detection module may include at least one computing device, for example, a server. Alternatively, the detection module may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field programmable logic gate array (field programmable gate array, FPGA), generic array logic (generic array logic, GAL), or any combination thereof.

A plurality of computing devices included in the detection module may be distributed in a same region, or may be distributed in different regions. The plurality of computing devices included in the detection module may be distributed in a same AZ, or may be distributed in different AZs. Similarly, the plurality of computing devices included in the detection module may be distributed in a same VPC, or may be distributed in a plurality of VPCs. The plurality of computing devices may be any combination of computing devices such as a server, an ASIC, a PLD, a CPLD, an FPGA, and a GAL.

An embodiment of this application further provides a computing device 100. The computing device 100 may be a part or all of an encoder device. As shown in FIG. 12, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus 102 may be classified into an address bus, a data bus, a control bus, and the like. For ease of representation, only one line is used in FIG. 12 for representation, but it does not indicate that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid state drive (solid state drive, SSD), or any other medium that can be used to carry or store expected program code in a form of an instruction or a data structure and that can be accessed by a computer, but is not limited thereto. The memory 106 exists independently, and is connected to the processor 104 through the bus 102, or the memory 106 is integrated with the processor 104.

The memory 106 stores executable program code, and the processor 104 executes the executable program code to separately implement functions of the detection module, the first determining module, and the encoding module, to implement the video encoding method provided in embodiments of this application. In other words, the memory 106 stores instructions for performing the video encoding method.

The communication interface 103 uses, for example but not limited to, a network interface card, or a transceiver module like a transceiver, to implement communication between the computing device 100 and another device or a communication network. The network interface includes a wired communication interface, or further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

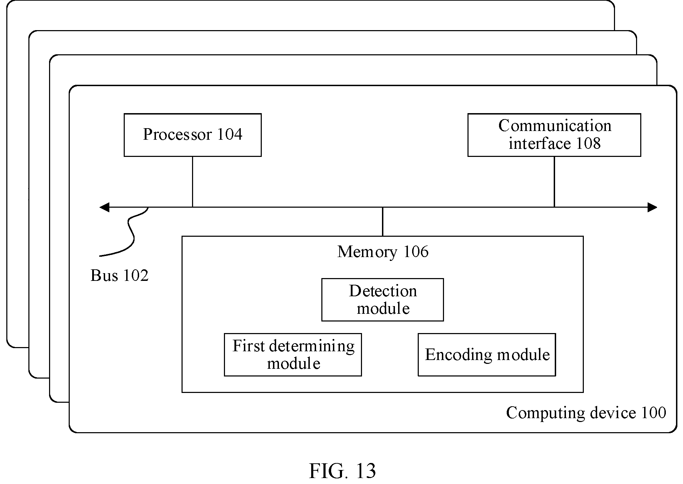

As shown in FIG. 13, the computing device cluster includes at least one computing device 100. A memory or memories 106 in one or more computing devices 100 in the computing device cluster may store same instructions for performing the video encoding method.

In some possible implementations, alternatively, a memory or memories 106 in one or more computing devices 100 in the computing device cluster each may store a part of instructions for performing the video encoding method. In other words, a combination of the one or more computing devices 100 may jointly execute the instructions for performing the video encoding method.

It should be noted that memories 106 in different computing devices 100 in the computing device cluster may store different instructions for performing some functions of the video encoding apparatus, respectively. In other words, the instructions stored in the memories 106 in the different computing devices 100 may implement functions of one or more of the detection module, the first determining module, and the encoding module.

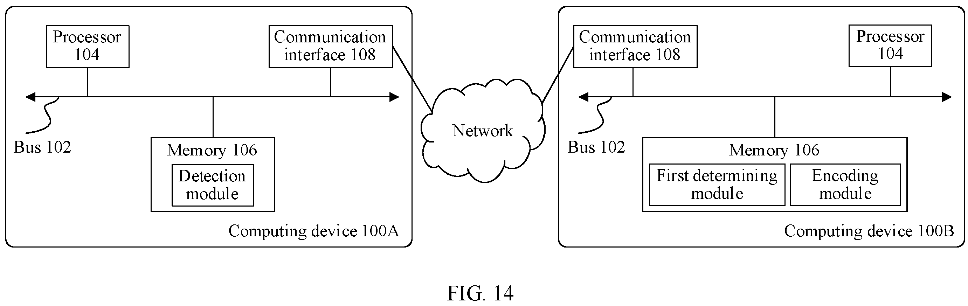

In some possible implementations, the one or more computing devices in the computing device cluster may be connected through a network. The network may be a wide area network, a local area network, or the like. FIG. 14 shows a possible implementation. As shown in FIG. 14, two computing devices 100A and 100B are connected through a network. Specifically, each computing device is connected to the network through a communication interface of the computing device. In such a possible implementation, a memory 106 in the computing device 100A stores instructions for performing functions of some modules included in a video encoding apparatus. In addition, a memory 106 in the computing device 100B stores instructions for performing functions of some modules included in the video encoding apparatus.

For example, the memory 106 in the computing device 100A stores instructions for performing a function of a detection module included in the video encoding apparatus. In addition, the memory 106 in the computing device 100B stores instructions for performing functions of a first determining module and an encoding module that are included in the video encoding apparatus.

It should be understood that a function of the computing device 100A shown in FIG. 14 may alternatively be completed by a plurality of computing devices 100. Likewise, a function of the computing device 100B may alternatively be completed by a plurality of computing devices 100.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct a computing device in a computing device cluster to perform the video encoding method provided in embodiments of this application.

An embodiment of this application further provides a computer program product including instructions. The computer program product may be software or a program product that includes instructions and that can run on a computing device or be stored in any usable medium. When the computer program product runs on a computing device included in a computing device cluster, the computing device in the computing device cluster is enabled to perform the video encoding method provided in embodiments of this application.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state drive (solid state drive, SSD)), or the like. It should be noted that the computer-readable storage medium mentioned in embodiments of this application may be a non-volatile storage medium, that is, may be a non-transitory storage medium.

It should be understood that "a plurality of" in this specification means two or more. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

It should be noted that, information (including but not limited to user equipment information, user personal information, and the like), data (including but not limited to data for analysis, stored data, presented data, and the like), and a signal that are related to embodiments of this application are authorized by a user or fully authorized by various parties, and collection, use, and processing of relevant data is required to comply with relevant laws and regulations and standards of relevant countries and regions. For example, the current frame of picture related in embodiments of this application is obtained under full authorization.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A video encoding method, wherein the method comprises:
performing scene detection on a current frame of picture to obtain a scene status of the current frame of picture, wherein the current frame of picture is a frame of picture that is encoded through inter predictive coding in a video signal;
determining, based on the scene status, a reference frame structure corresponding to the current frame of picture, wherein the reference frame structure indicates a reference frame of picture of the current frame of picture and an encoding layer of the current frame of picture; and
encoding the current frame of picture into a bit stream based on the reference frame structure.

2. The method according to claim 1, wherein the performing scene detection on a current frame of picture to obtain a scene status of the current frame of picture comprises:
calculating a first frame difference between the current frame of picture and a base frame of picture, wherein the base frame of picture is a frame of picture that is located before the current frame of picture and in which scene switching occurs last time; and
when the first frame difference is not greater than a first frame difference threshold, determining that the scene status is stable scene; and
the determining, based on the scene status, a reference frame structure corresponding to the current frame of picture comprises:
based on that the scene status is stable scene, determining that the reference frame structure corresponding to the current frame of picture is a hierarchical reference structure or an IPPP structure.

3. The method according to claim 1, wherein the performing scene detection on a current frame of picture to obtain a scene status of the current frame of picture comprises:
calculating a first frame difference between the current frame of picture and a base frame of picture, wherein the base frame of picture is a frame of picture that is located before the current frame of picture and in which scene switching occurs last time;
calculating a second frame difference between the current frame of picture and a window end frame of picture, wherein the window end frame of picture and the current frame of picture are located in a same detection window, and the window end frame of picture is a last frame of picture comprised in the detection window; and
when the first frame difference is greater than a first frame difference threshold, and the second frame difference is not greater than a second frame difference threshold, determining that the scene status is scene switching; and
the determining, based on the scene status, a reference frame structure corresponding to the current frame of picture comprises:
based on that the scene status is scene switching, determining that the reference frame structure corresponding to the current frame of picture is a hierarchical reference structure or an IPPP structure.

4. The method according to claim 1, wherein the performing scene detection on a current frame of picture to obtain a scene status of the current frame of picture comprises:
calculating a first frame difference between the current frame of picture and a base frame of picture, wherein the base frame of picture is a frame of picture that is located before the current frame of picture and in which scene switching occurs last time;
calculating a second frame difference between the current frame of picture and a window end frame of picture, wherein the window end frame of picture and the current frame of picture are located in a same detection window, and the window end frame of picture is a last frame of picture comprised in the detection window;
calculating a third frame difference between the base frame of picture and the window end frame of picture; and
when the first frame difference is greater than a first frame difference threshold, the second frame difference is greater than a second frame difference threshold, and the third frame difference is not greater than a third frame difference threshold, determining that the scene status is scene flickering; and
the determining, based on the scene status, a reference frame structure corresponding to the current frame of picture comprises:
based on that the scene status is scene flickering, determining that the reference frame structure corresponding to the current frame of picture is an IPPP structure.

5. The method according to claim 1, wherein the performing scene detection on a current frame of picture to obtain a scene status of the current frame of picture comprises:
calculating a first frame difference between the current frame of picture and a base frame of picture, wherein the base frame of picture is a frame of picture that is located before the current frame of picture and in which scene switching occurs last time;
calculating a second frame difference between the current frame of picture and a window end frame of picture, wherein the window end frame of picture and the current frame of picture are located in a same detection window, and the window end frame of picture is a last frame of picture comprised in the detection window;
calculating a third frame difference between the base frame of picture and the window end frame of picture; and
when the first frame difference is greater than a first frame difference threshold, the second frame difference is greater than a second frame difference threshold, and the third frame difference is greater than a third frame difference threshold, determining that the scene status is frequent scene switching; and
the determining, based on the scene status, a reference frame structure corresponding to the current frame of picture comprises:
based on that the scene status is frequent scene switching, determining that the reference frame structure corresponding to the current frame of picture is an IPPP structure.

6. The method according to claim 2 or 3, wherein the method further comprises:
calculating a movement complexity of the current frame of picture; and
determining, based on the movement complexity, an encoding layer of the hierarchical reference structure corresponding to the current frame of picture.

7. The method according to claim 6, wherein an encoder device supports a maximum of three encoding layers; and the determining, based on the movement complexity, an encoding layer of the hierarchical reference structure corresponding to the current frame of picture comprises:
when the movement complexity is less than a first complexity threshold, determining that the encoding layer of the current frame of picture is a third layer;
when the movement complexity is greater than or equal to a first complexity threshold and the movement complexity is less than a second complexity threshold, determining that the encoding layer of the current frame of picture is a second layer, wherein the second complexity threshold is greater than the first complexity threshold; or
when the movement complexity is greater than or equal to a second complexity threshold, determining that the encoding layer of the current frame of picture is a first layer.

8. The method according to claim 2 or 3, wherein the method further comprises:
obtaining a current network status and a current network bandwidth; and
determining, based on the network status and the network bandwidth, an encoding layer of the hierarchical reference structure corresponding to the current frame of picture.

9. The method according to claim 8, wherein an encoder device supports a maximum of three encoding layers, and the determining, based on the network status and the network bandwidth, an encoding layer of the hierarchical reference structure corresponding to the current frame of picture comprises:
when the network status is congested network, determining the encoding layer of the current frame of picture based on the network bandwidth, a first bandwidth threshold, and a second bandwidth threshold, wherein the second bandwidth threshold is greater than the first bandwidth threshold.

10. The method according to claim 9, wherein the determining the encoding layer of the current frame of picture based on the network bandwidth, a first bandwidth threshold, and a second bandwidth threshold comprises:
when the network bandwidth is less than the first bandwidth threshold, determining that the encoding layer of the current frame of picture is a third layer;
when the network bandwidth is greater than or equal to the first bandwidth threshold and the network bandwidth is less than the second bandwidth threshold, determining that the encoding layer of the current frame of picture is a second layer; or
when the network bandwidth is greater than or equal to the second bandwidth threshold, determining that the encoding layer of the current frame of picture is a first layer.

11. The method according to claim 9, wherein the method further comprises:
when the network status is smooth network, obtaining a movement complexity corresponding to the current frame of picture; and
determining the encoding layer of the current frame of picture based on the movement complexity.

12. The method according to claim 2, wherein the method further comprises:
determining that a latest frame of picture that is located before the current frame of picture, that is capable of being used as a reference frame, and whose encoding layer is less than or equal to the encoding layer of the current frame of picture is the reference frame of picture of the current frame of picture.

13. The method according to any one of claims 3 to 5, wherein the method further comprises:
determining that a latest frame of picture that is located before the current frame of picture and that is capable of being used as a reference frame is the reference frame of picture of the current frame of picture.

14. The method according to claim 1, wherein after the determining, based on the scene status, a reference frame structure corresponding to the current frame of picture, the method further comprises:
performing frame discarding on the current frame of picture based on the encoding layer corresponding to the current frame of picture and the scene status and/or a network status.

15. A video encoding apparatus, wherein the apparatus comprises:
a detection module, configured to perform scene detection on a current frame of picture to obtain a scene status of the current frame of picture, wherein the current frame of picture is a frame of picture that is encoded through inter predictive coding in a video signal;
a first determining module, configured to determine, based on the scene status, a reference frame structure corresponding to the current frame of picture, wherein the reference frame structure indicates a reference frame of picture of the current frame of picture and an encoding layer of the current frame of picture; and
an encoding module, configured to encode the current frame of picture into a bit stream based on the reference frame structure.

16. The apparatus according to claim 15, wherein the detection module is specifically configured to:
calculate a first frame difference between the current frame of picture and a base frame of picture, wherein the base frame of picture is a frame of picture that is located before the current frame of picture and in which scene switching occurs last time; and
when the first frame difference is not greater than a first frame difference threshold, determine that the scene status is stable scene; and
the first determining module is specifically configured to:
based on that the scene status is stable scene, determine that the reference frame structure corresponding to the current frame of picture is a hierarchical reference structure or an IPPP structure.

17. The apparatus according to claim 15, wherein the detection module is specifically configured to:
calculate a first frame difference between the current frame of picture and a base frame of picture, wherein the base frame of picture is a frame of picture that is located before the current frame of picture and in which scene switching occurs last time;
calculate a second frame difference between the current frame of picture and a window end frame of picture, wherein the window end frame of picture and the current frame of picture are located in a same detection window, and the window end frame of picture is a last frame of picture comprised in the detection window; and
when the first frame difference is greater than a first frame difference threshold, and the second frame difference is not greater than a second frame difference threshold, determine that the scene status is scene switching; and
the first determining module is specifically configured to:
based on that the scene status is scene switching, determine that the reference frame structure corresponding to the current frame of picture is a hierarchical reference structure or an IPPP structure.

18. The apparatus according to claim 15, wherein the detection module is specifically configured to:
calculate a first frame difference between the current frame of picture and a base frame of picture, wherein the base frame of picture is a frame of picture that is located before the current frame of picture and in which scene switching occurs last time;
calculate a second frame difference between the current frame of picture and a window end frame of picture, wherein the window end frame of picture and the current frame of picture are located in a same detection window, and the window end frame of picture is a last frame of picture comprised in the detection window;
calculate a third frame difference between the base frame of picture and the window end frame of picture; and
when the first frame difference is greater than a first frame difference threshold, the second frame difference is greater than a second frame difference threshold, and the third frame difference is not greater than a third frame difference threshold, determine that the scene status is scene flickering; and
the first determining module is specifically configured to:
based on that the scene status is scene flickering, determine that the reference frame structure corresponding to the current frame of picture is an IPPP structure.

19. The apparatus according to claim 15, wherein the detection module is specifically configured to:
calculate a first frame difference between the current frame of picture and a base frame of picture, wherein the base frame of picture is a frame of picture that is located before the current frame of picture and in which scene switching occurs last time;
calculate a second frame difference between the current frame of picture and a window end frame of picture, wherein the window end frame of picture and the current frame of picture are located in a same detection window, and the window end frame of picture is a last frame of picture comprised in the detection window;
calculate a third frame difference between the base frame of picture and the window end frame of picture; and
when the first frame difference is greater than a first frame difference threshold, the second frame difference is greater than a second frame difference threshold, and the third frame difference is greater than a third frame difference threshold, determine that the scene status is frequent scene switching; and
the first determining module is specifically configured to:
based on that the scene status is frequent scene switching, determine that the reference frame structure corresponding to the current frame of picture is an IPPP structure.

20. The apparatus according to claim 16 or 17, wherein the apparatus further comprises:
a calculation module, configured to calculate a movement complexity of the current frame of picture; and
a second determining module, configured to determine, based on the movement complexity, an encoding layer of the hierarchical reference structure corresponding to the current frame of picture.

21. The apparatus according to claim 20, wherein an encoder device supports a maximum of three encoding layers, and the second determining module is specifically configured to:
when the movement complexity is less than a first complexity threshold, determine that the encoding layer of the current frame of picture is a third layer;
when the movement complexity is greater than or equal to a first complexity threshold and the movement complexity is less than a second complexity threshold, determine that the encoding layer of the current frame of picture is a second layer, wherein the second complexity threshold is greater than the first complexity threshold; or
when the movement complexity is greater than or equal to a second complexity threshold, determine that the encoding layer of the current frame of picture is a first layer.

22. The apparatus according to claim 16 or 17, wherein the apparatus further comprises:
a first obtaining module, configured to obtain a current network status and a current network bandwidth; and
a third determining module, configured to determine, based on the network status and the network bandwidth, an encoding layer of the hierarchical reference structure corresponding to the current frame of picture.

23. The apparatus according to claim 22, wherein an encoder device supports a maximum of three encoding layers, and the third determining module comprises:
a determining unit, configured to: when the network status is congested network, determine the encoding layer of the current frame of picture based on the network bandwidth, a first bandwidth threshold, and a second bandwidth threshold, wherein the second bandwidth threshold is greater than the first bandwidth threshold.

24. The apparatus according to claim 23, wherein the determining unit is specifically configured to:
when the network bandwidth is less than the first bandwidth threshold, determine that the encoding layer of the current frame of picture is a third layer;
when the network bandwidth is greater than or equal to the first bandwidth threshold and the network bandwidth is less than the second bandwidth threshold, determine that the encoding layer of the current frame of picture is a second layer; or
when the network bandwidth is greater than or equal to the second bandwidth threshold, determine that the encoding layer of the current frame of picture is a first layer.

25. The apparatus according to claim 23, wherein the apparatus further comprises:
a second obtaining module, configured to: when the network status is smooth network, obtain a movement complexity corresponding to the current frame of picture; and
a fourth determining module, configured to determine the encoding layer of the current frame of picture based on the movement complexity.

26. The apparatus according to claim 16, wherein the apparatus further comprises:
a fifth determining module, configured to determine that a latest frame of picture that is located before the current frame of picture, that is capable of being used as a reference frame, and whose encoding layer is less than or equal to the encoding layer of the current frame of picture is the reference frame of picture of the current frame of picture.

27. The apparatus according to any one of claims 17 to 19, wherein the apparatus further comprises:
a sixth determining module, configured to determine that a latest frame of picture that is located before the current frame of picture and that is capable of being used as a reference frame is the reference frame of picture of the current frame of picture.

28. The apparatus according to claim 15, wherein the apparatus further comprises:
a frame discarding module, configured to perform frame discarding on the current frame of picture based on the encoding layer corresponding to the current frame of picture and the scene status and/or a network status.

29. A computing device cluster, wherein the computing device cluster comprises at least one computing device, and each computing device comprises a processor and a memory; and
a processor of the at least one computing device is configured to execute instructions stored in a memory of the at least one computing device, to enable the computing device cluster to perform the method according to any one of claims 1 to 14.

30. A computer-readable storage medium, wherein the storage medium comprises computer program instructions, and when the computer program instructions are executed by a computing device cluster, the computing device cluster performs the method according to any one of claims 1 to 14.

31. A computer program product comprising instructions, wherein when the instructions are run by a computing device cluster, the computing device cluster is enabled to perform the method according to any one of claims 1 to 14.
